# EUROPEAN PATENT SPECIFICATION

(11) **EP 3 168 117 B1**
(45) Date of publication and mention of the grant of the patent: **31.10.2018**
(21) Application number: 16198181.6
(22) Date of filing: 10.11.2016
(51) Int. Cl.: B62D 25/18, B60B 39/02, B62D 25/16

(54) **SPRAY SUPRESSANT APPARATUS**
SPRÜHUNTERDRÜCKUNGSVORRICHTUNG
SURPRESSEUR DE PULVÉRISATION

(30) Priority: 12.11.2015 TR 201514207
(43) Date of publication of application: 17.05.2017
(73) Proprietor: Tirsan Treyler Sanayi Ve Ticaret Anonim Sirketi, 54580 Sakarya (TR)
(72) Inventor: YILMAZ, TUGAY, 54580 Sakarya (TR); AKINCI, VOLKAN, 54580 Sakarya (TR)
(74) Representative: Yamankaradeniz, Kemal

(56) References cited:
- DE-A1-102011 014 890
- US-A- 4 585 242
- US-B1- 6 270 118

## Description

### Technical Field

Present invention relates to a mechanism installed to block water and/or mud spray generated by contact of wheels of motorized and non-motorized vehicles with wet road surface.

### Current State of the Art

Anti-spray systems that are currently used on vehicles soak the water/mud spray splashing on the area covered geometrically by such systems into the road surface with minimum splash as described in respective regulations, by recesses and/or protrusion integrated thereon. However these systems are not effective on areas that are not geometrically covered by them.

This creates a traffic safety risk on vehicles riding alongside or behind vehicles that are cruising at high speed particularly on highways or dual carriageways during or after heavy rainfall. Current systems are inadequate to this end.

USA patent application numbered US2005146129 refers to a system blocking wet weather water and mud spray and splash generated by ground engaging tires of a vehicle. This system blocks water and/or mud spray partially by fixed plates located behind the wheels. However this system can only block a certain portion of water/mud spray and fails to introduce a complete solution.

Turkish patent application numbered TR 2005/03672 also refers to a system blocking wet weather water and mud spray and splash generated by ground engaging tires of a vehicle. This system has eliminated a technical problem inherent in the above mentioned U.S. patent application by inserting a plate to the sides of the wheels. However the sections of plates inserted to the sides of wheels cannot prevent egress of a certain amount of water and/or mud spray from these plates and thus fail to introduce a complete solution.

US4585242A publication numbered application refers an apparatus for blocking water and/or mud spray generated by contact of wheels of motorized and non-motorizes vehicles with wet road surface, wherein a generated air curtain being located between the inner body of the fender and the wheel, preventing the spray generated by the wheels from egressing out.

The systems referred to in above mentioned patent applications are fixed systems that do not facilitate modifications and do not offer control units or sensors for intelligent control

Consequently, it was deemed necessary to introduce improvements to the technical field due to above mentioned problems.

### Objective of Invention

Present invention which is inspired by the current state of the art, aims at eliminating above mentioned problems,
Another objective of present invention is to minimize spray formation in all areas that might impose a risk on other vehicles on the road, rather than just within a certain geometrical area as described under the paragraph titled current state of the art.

One other objective of present invention is to reduce aerodynamic friction coefficient of the vehicle by preventing the air swept at the sides of the vehicle from being directed to the underside of the vehicle by an air curtain to be generated at all wheel areas.

Yet another objective of present invention is to contribute indirectly to cooling the wheels and brake systems via controlled air circulation.

One other objective of present invention is to suppress a maximum amount of spray by using a minimum amount of power by altering the parameters of the air curtain through sensors and a control unit, depending on the velocity of the vehicle and spray amount.

Present invention relates to an apparatus used for blocking water and/or mud spray generated by contact of wheels of motorized and non-motorized vehicles with wet road surface with the purpose of fulfilling all of the objectives mentioned here above and described here below in detail. The said apparatus comprises following components;
- A minimum of one blowing vent located on the body of the vehicle and body of the fender, ensuring flow of compressed air at the required angle and speed and generating an air curtain,
- A minimum of one air distribution duct located on the underbody of the vehicle, transporting compressed air from a compressed air supply to the blowing vents,
- One control unit located on the underbody of the vehicle, processing speed and precipitation data sent by at least one sensor located between the wheels and body of vehicle, detecting speed and precipitation and sending respective speed and precipitation data to the control unit, the control unit (6) using data sent by the at least one sensor (7) to set the optimum air pressure level to be released by the compressed air supply, compressed air tank and valve,
- the compressed air supply located on the underbody of the vehicle generating air at the required pressure for blowing vents,
- the generated air curtain being located between the inner body of the fender and the wheel, preventing the spray generated by the wheels from egressing out by using the controlled and compressed air blown by blowing ducts

Structural features of present invention as well as the advantages thereof together with auxiliary components can be best understood with the help of following diagrams and thus assessment of the patent should be made by reading this application together with these diagrams and detailed descriptions.

### Diagrams Describing Invention

Diagram 1; Isometric view of the spray suppressant apparatus constituting the subject of present invention.
Diagram 2; the air curtain generated by the spray suppressant apparatus constituting the subject of present invention.
Diagram 3; the location of the air curtain generated by the spray suppressant apparatus constituting the subject of present invention.
Diagram 4; Side view of the air curtain generated by the spray suppressant apparatus constituting the subject of present invention.

### Description of References

1.Fender Body
2. Vehicle Body
3. Air Blowing Vents
4.Air Distribution Ducts
5.Wheels
6.Control Unit
7.Sensors
8.Compressed Air Supply
9.Compresssed Air Tank and Valve
10.Air Curtain

### Detailed Description of Invention

An apparatus for blocking water and/or mud spray generated by contact of wheels (5) of motorized and non-motorized vehicles with wet road surface, comprising
- A minimum of one blowing vent (3) located on the body of the vehicle (2) and body of the fender (1), ensuring flow of compressed air at the required angle and speed and generating an air curtain (10),
- A minimum of one air distribution duct (4) located on the underbody of the vehicle (2), transporting compressed air from a compressed air supply (8) to the blowing vents (3),
- One control unit (6) located on the underbody of the vehicle (2), processing speed and precipitation data sent by at least one sensor (7) located between the wheels (5) and body (2) of vehicle, detecting speed and precipitation and sending respective speed and precipitation data to the control unit (6), the control unit (6) using data sent by the at least one sensor (7) to set the optimum air pressure level to be released by the compressed air supply (8), compressed air tank and valve (9),
- the generated air curtain (10) being located between the inner body (1) of the fender and the wheel (5), preventing the spray generated by the wheels (5) from egressing out by using the controlled and compressed air blown by blowing ducts (3).

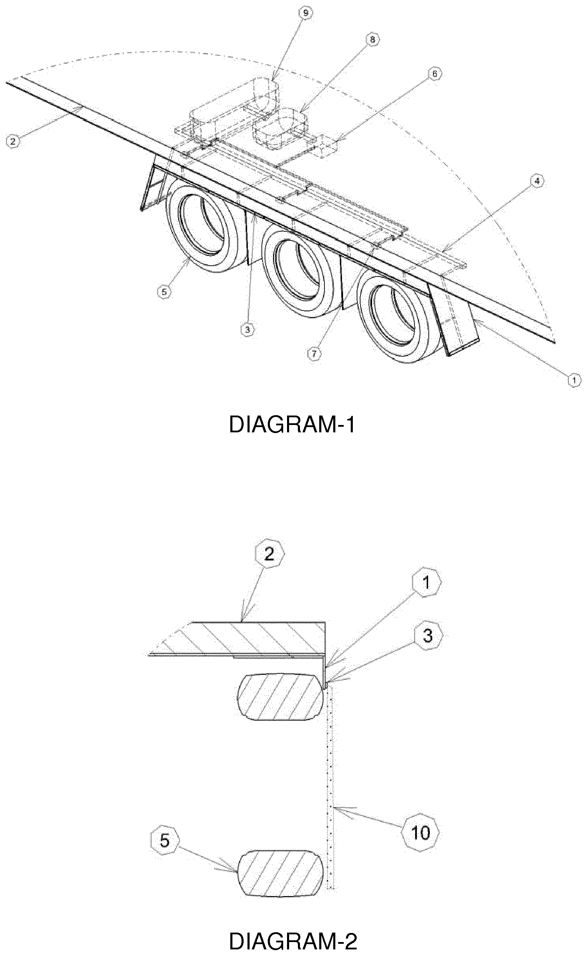

The system to be used on motorized and non-motorized vehicles comprises fender body (1), vehicle body (2), air blowing vents (3), air distribution ducts (4), wheels (5), control unit (6), sensors (7), compressed air supply (8), compressed air tank and valve (9) and air curtain (10). (Please See Diagram 1)

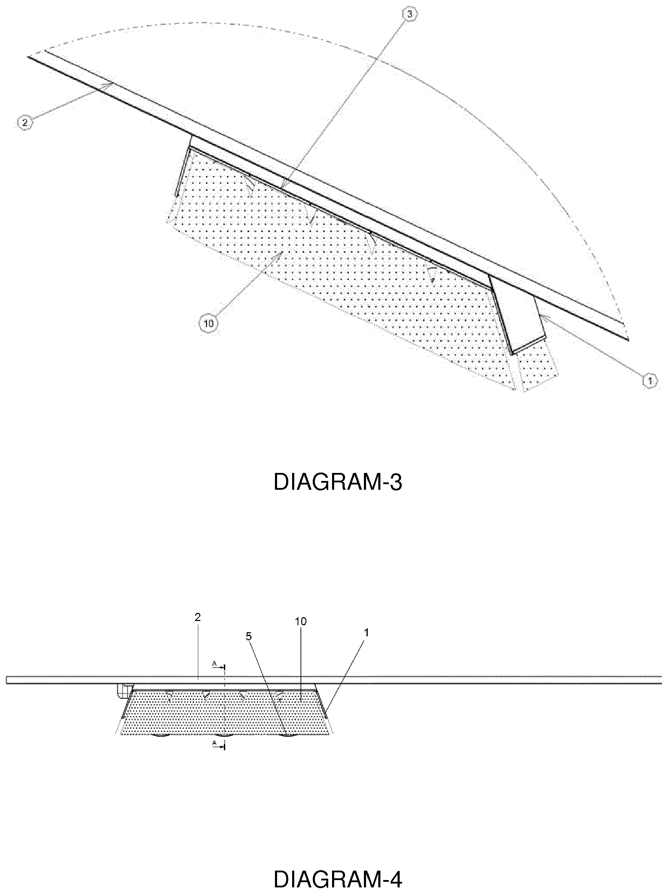

The control unit (6) uses data sent by the sensors (7) to set the optimum air pressure level to be released by the compressed air supply (8), compressed air tank and valve (9).
Compressed air is transported to air blowing vents (3) through air distribution ducts (4) installed on the vehicle body (2) and fender body (1). Controlled and compressed air blown by blowing ducts (3) generates the air curtain (10) preventing the spray generated by the wheels (5) from egressing out. (Please see Diagram 2, Diagram 3 and Diagram 4).

## Claims

1. An apparatus for blocking water and/or mud spray generated by contact of wheels (5) of motorized and non-motorized vehicles with wet road surface, comprising,
• A minimum of one blowing vent (3) located on the body of the vehicle (2) and body of the fender (1), ensuring flow of compressed air at the required angle and speed and generating an air curtain (10),
• A minimum of one air distribution duct (4) located on the underbody of the vehicle (2), transporting compressed air from a compressed air supply (8) to the blowing vents (3),
• One control unit (6) located on the underbody of the vehicle (2), processing speed and precipitation data sent by at least one sensor (7) located between the wheels (5) and body (2) of vehicle, detecting speed and precipitation and sending respective speed and precipitation data to the control unit (6), the control unit (6) using data sent by the at least one sensor (7) to set the optimum air pressure level to be released by the compressed air supply (8), compressed air tank and valve (9),
• the generated air curtain (10) being located between the inner body (1) of the fender and the wheel (5), preventing the spray generated by the wheels (5) from egressing out by using the controlled and compressed air blown by blowing ducts (3).

## Patentansprüche

1. Eine Vorrichtung zur Blockierung von Wasser-/Schmutzspritze, die wird durch den Kontakt von Wagenrädern der Kraftfahrzeugen und motorlosen Fahrzeugen mit nasser Fahrbahn erzeugt wird, umfasst;
• Mindestens eine Entlüftungsöffnung (3) an der Fahrzeugkarosserie (2) und am Koftflügelkörper (1), die die Druckluft im gewünschten Winkel und in der gewünschten Geschwindigkeit strömt und einen Luftschleier (10) erzeugt,
• Mindestens ein Luftverteilungskanal (4) am Unterboden des Fahrzeugs (2), der die Druckluft von einer Druckluftversorgung (8) zu den Entlüftungsöffnungen (3) transportiert,
• Eine Steuereinheit (6) befindet sich am Unterboden des Fahrzeugs (2), die sich um jeweilige Geschwindigkeits- und Niederschlagsdaten handelt, die von mindestens einem zwischen den Wagenrädern (5) und der Fahrzeugkarosserie (2) befundene Sensor (7) gesendet werden, und die Steuereinheit (6) verwendet Daten, die von dem mindestens einen Sensor (7) gesendet werden, um den optimalen Luftdruckpegel einzustellen, der durch die Druckluftversorgung (8), den Druckluftbehälter und -Ventil (9) freigegeben wird,
• Der erzeugte Luftschleier (10) ist zwischen dem inneren Körper des Kotflügels (1) und dem Wagenrad (5) angeordnet und verhindert, dass der von den Rädern (5) erzeugte Spritze austritt, indem die kontrollierte und durch Blaskanäle geblasene Druckluft (3) verwendet wird.

## Revendications

1. Un appareil pour bloquer les projections d'eau et / ou de boue générées par le contact des roues (5) de véhicules motorisés et non motorisés avec une surface de route humide, comprenant :
• Un minimum d'un évent de soufflage (3) situé sur le corps du véhicule (2) et le corps de l'aile (1), assurant un débit d'air comprimé à l'angle et à la vitesse requis et générant un rideau d'air (10),
• Un minimum d'un conduit de distribution d'air (4) situé sur le soubassement du véhicule (2), transportant de l'air comprimé provenant d'une source d'air comprimé (8) vers les évents de soufflage (3),
• Une unité de commande (6) située sur le soubassement du véhicule (2), qui traite les données de vitesse et de précipitation envoyées par au moins un capteur (7) situé entre les roues (5) et le corps du véhicule (2) pour détecter la vitesse et les précipitations et définit le niveau de pression d'air optimal à libérer par la source d'air comprimé (8), le réservoir d'air comprimé et la vanne (9)
• Le rideau d'air (10) généré entre le corps interne de l'aile (1) et la roue (5), empêchant la sortie de projections générées par les roues (5) en utilisant l'air contrôlé et comprimé soufflé par les conduits de soufflage (3).
